(19) **Europäisches Patentamt / European Patent Office / Office européen des brevets**

(11) **EP 4 563 245 A1**

(12) **EUROPEAN PATENT APPLICATION**
published in accordance with Art. 153(4) EPC

(43) Date of publication:
04.06.2025  Bulletin 2025/23

(51) International Patent Classification (IPC):
B05D 1/28 (2006.01)      B05C 11/10 (2006.01)

(21) Application number: 23845157.9

(22) Date of filing: 21.06.2023

(86) International application number:
PCT/CN2023/101883

(87) International publication number:
WO 2024/021944 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022  CN 202210901518

(71) Applicant: Sinomech Corporation
Guangzhou, Guangdong 510830 (CN)

(72) Inventors:
• ZUO, Guangshen
  Guangzhou, Guangdong 510830 (CN)
• ZUO, Jinjin
  Guangzhou, Guangdong 510830 (CN)
• HUANG, Shunli
  Guangzhou, Guangdong 510830 (CN)

(74) Representative: Haseltine Lake Kempner LLP
Cheapside House
138 Cheapside
London EC2V 6BJ (GB)

(54) **COMPOSITE METHOD AND APPARATUS FOR COATING IN DIFFERENT MANNERS AND COORDINATED CONTROL OF APPLIED WEIGHT**

(57)     A laminating method and machine for different coating ways with linkage control of coating amounts, using two coating methods of five-roll transfer coating and gravure coating to respectively coat Adhesive A and B of dual-component adhesive on the surface and inner layer of the laminating substrate. By controlling the coating amount in two different ways, the coating amounts of the two methods are linked controlled, so that the coating amount of Adhesive A remains at a certain proportion relative to Adhesive B, and the total coating amount meets the requirements of low coating amount and/or reaction curing of dual-component adhesive. Then, the two coated surfaces of the substrates are compounded and rewound relative to each other. The laminating film produced by this method has the advantages of short curing time after the machine, high coating accuracy, good uniformity at extremely low coating amounts, the ability to achieve large coating amounts, and good control operability.

Fig. 1

# Description

## Technical Field

The present invention relates to the field of laminatings, particularly to a laminating method and machine for different coating ways with linkage control of coating amounts.

## Background Art

Currently, solvent-free laminating processes are widely used. However, in some special applications, a method of dual-coating laminating is required, which involves coating two substrates with Adhesive A and adhesive B of dual-component adhesive, respectively, and then laminating these two substrates. However, if conventional five-roll transfer coating methods are used for both substrates, there are disadvantages such as low coating accuracy, poor product control stability, and difficulty in meeting extremely low coating requirements.

## Summary

The technical problem to be solved by the present invention is to provide a laminating method and machine for coating with different methods and linkage control of coating amount, wherein the laminating film has the advantages of short curing time after machine shutdown, high coating accuracy, good uniformity at extremely low coating amounts, ability to achieve large coating amounts, and good control operability.

To solve the above technical problem, one technical solution of the present invention is a laminating method for different coating ways with linkage control of coating amounts, comprising the following steps:

(1) using multi-roll transfer coating to apply Adhesive A on the coating surface of the first substrate, and using engraved roller gravure coating to apply Adhesive B on the coating surface of the second substrate, where the coating amount of Adhesive A relative to Adhesive B is maintained at a preset ratio and the total coating amount meets the set requirements;

(2) pressing and laminating the coating surface of the first substrate with the coating surface of the second substrate and rewinding;

(3) rapidly curing the wound material into a laminating film under set temperature conditions.

As an improvement,

the coating amount of Adhesive A $C_A=100*C_B/R_{AB}$ $=100* K_B*Q_B/R_{AB}$ g/m²;
the coating amount of Adhesive B $C_B=K_B*Q_B$ g/m²;
total coating amount $C_\Sigma=C_A+C_B=(1+100/R_{AB}) K_B*Q_B$ g/m²;

theoretical maximum coating amount $Q_B=\rho*V/1000$ g/m²;
practical mixing ratio of dual-component adhesive $R_{AB}=R_0+\triangle$;
where $K_B$ is the transfer rate of Adhesive B to the engraved roller, $\rho$ (g/cm³) is the density of Adhesive B, V (mm³/m²) is the density specific volume ratio of the gravure network, and $\triangle$ takes a value in the range of 0-20.

As an improvement, when the target value of the total coating amount $C_0$ of the laminating film and the mixing ratio $R_{AB}$ of the dual-component of adhesive are known, the process for calculatting, selectting and setting the laminating control parameter is as follows:

1) calculate the required coating amount $C_{B0}$ of Adhesive B according to the formula of

$$C_{B0}= R_{AB} *C_0/(100+R_{AB});$$

2) read the transfer rate $K_{BN}$ of available engraved rollers for Adhesive B and the density specific volume value $V_N$ (mm³/m²) of available engraved rollers, and the density $\rho$ (g/cm³) of Adhesive B, and calculate the calculated coating amount $C_{BN}$ of the engraved roller according to the formula of $C_{BN}=\rho*K_{BN} *V_N/1000$;
3) compare the absolute value of the difference between the calculated coating amount of the engraved roller and the required coating amount with the error k by the formula of $\triangle C=|C_{B0} - C_{BN}|\leq k$; if it is not satisfied, exclude and return to step 2) to repeatedly read the parameters of the available engraved roller and circularly calculate with K taking values from 0 - 0.02; if satisfied, proceed to the next step;
4) calculate the coating amount $C_{AN}$ of Adhesive A based on the total coating amount $C_0$ and the calculated coating amount $C_{BN}$ of the selected engraved roller by step 3) according to the formula of $C_{AN}=C_0-C_{BN}$;
5) determine whether the $C_{AN}$ value that is calculated by step 4)satisfies the judgment condition $C_{AN} \in$ [0.8, 2.5]; if not satisfied, exclude and return to step 2) to repeatedly read the parameters of the available engraved roller and circularly calculate; those meeting the conditions are listed in the "applicable engraved roller group"; loop to read data and calculate until all parameters of the available engraved roller are read; if none of parameters of the engraved roller meet the requirements, new specifications of parameters of engraved roller need to be selected;
6) compare the number of nets of engraved roller and select the engraved roller with the maximum number of cavities in the "applicable engraved roller group" as the intended engraved roller;
7) select the calculated $C_{BN}$ value of the intended engraved roller as $C_B$, and calculate the required coating amount $C_A$ of Adhesive A according to $C_A=C_0-C_B$;

8) calculate the rate of transfer roller of the five-roll transfer coating mechanism by the formula of $Y=C_A*Y_E/C_E$, where $Y_E$ and $C_E$ are the standard rate of transfer roller and the corresponding coating amount set value (g/ $m^2$ ) of the five-roll transfer coating mechanism, and set this value in the control screen input box of machine;

9) after starting the machine, adjust the rate value $Y_A$ of transfer roller appropriately according to Adhesive A coating amount value $T_{AC}$ displayed by the substrate coating amount detection equipment to match the five-roll transfer coating amount with the engraved roller coating amount.

As an improvement, when the estimated value $C_0$ of the total coating amount of the laminating film and the mixing ratio $R_{AB}$ of the dual-component of adhesive are known, and the requirement for peeling strength index value $P_E$ of the laminating film, the process for calculatting, selectting and setting the laminating control parameter is as follows:

1) calculate the required coating amount $C_{B0}$ of Adhesive B according to the formula of $C_{B0}= R_{AB} *C_0/(100+R_{AB})$;

2) read the transfer rate $K_{BN}$ of available engraved rollers for Adhesive B and the density specific volume value $V_N$ ($mm^3/m^2$) of available engraved rollers, and the density $\rho$ ($g/cm^3$) of Adhesive B, and calculate the calculated coating amount $C_{BN}$ of the engraved roller according to the formula of $C_{BN}=\rho*K_{BN} *V_N /1000$;

3) compare the difference between the calculated coating amount of the engraved roller and the required coating amount with the error k by the formula of $\triangle C=C_{B0}-C_{BN}\leq k$; if it is not satisfied, exclude and return to step 2) to repeatedly read and calculate the available engraved roller parameters; circularly calculate with K taking values from 0 - 0.02; if satisfied, proceed to the next step;

4) calculate the coating amount $C_{AN}$ of Adhesive A based on the mixing ratio $R_{AB}$ of the dual-component of adhesive and the calculated coating amount $C_{BN}$ of the selected engraved roller by step 3) according to the formula of $C_{AN}=100C_{BN}/R_{AB}$;

5) determine whether the calculated $C_{AN}$ value that is calculated by step 4) satisfies the judgment condition $C_{AN} \in [0.8, 2.5]$; if not satisfied, exclude and return to step 2) to repeatedly read the parameters of the available engraved roller and circularly calculate; those meeting the conditions are listed in the "pre-selected engraved roller group"; loop to read data and calculate until all parameters of the available engraved roller are read; if none of the parameters of engraved roller parameters meet the requirements, new specifications parameters of of engraved roller parameters need to be selected;

6) calculate the rate of transfer roller by the formula of $Y_{AN}=C_{AN}*Y_E/C_E$ of the five-roll transfer coating mechanism; where $Y_E$ and $C_E$ are the rate of standard transfer roller and the corresponding coating amount set value (g/m$^2$) of the five-roll transfer coating mechanism, and set this value in the control screen input box of machine;

7) start the machine and conduct a laminating film peeling strength test; if the actual peeling strength value of the laminating film is not less than the peelling strength index value $P_E$, it is included in the "usable engraved roller group" and proceed to the next step; otherwise, exclude and read the parameters of the next available engraved roller in "pre-selected engraved roller group" and return to step 6);

8) calculate the total coating amount by the formula of $C_N=C_{AN}+C_{BN}$, and read the parameters of the next pre-selected engraved roller, return to step 6), until all parameters of the "pre-selected engraved roller group" are read;

9) read the total coating amount of the laminating film in the usable engraved roller group, and select the engraved roller that it's parameter is the smallest value, set the rate of transfer roller of selected engraved roller as the input value of the five-roll transfer coating mechanism.

As an improvement, the rate of transfer roller Y value of the five-roll transfer coating mechanism can be obtained by looking up or interpolating the rate of transfer roller /coating amount curve.

As an improvement, the engraved rollers comprise various specifications, and the parameter vectors of each engraved roller are different. The parameter vector is a directly calculated value or an optimal value set by the industry or user. The parameter vector comprises mesh number, cavity shape, depth, and cavity volume.

To solve the above technical problem, the second technical solution of the present invention is laminating machine for different coating ways with linkage control of coating amounts, in which the connecting beam is provided at the top of the machine, and from left to right below the beam, there are successively arranged a first unwinding and coating station, a laminating and rewinding station, and a second unwinding and coating station; the first unwinding and coating station comprises a first unwinding unit and a five-roll transfer coating unit; the laminating and rewinding station comprises a laminating unit and a rewinding unit, and he second unwinding and coating station comprises a second unwinding unit and an engraved roller coating unit; the first idler rollers for the first web path connecting the five-roll transfer coating unit with the laminating unit and the second idler rollers for the second web path connecting the engraved roller coating unit with the laminating unit are provided on the connecting beam; and a detecting instrument for the coating amount is provided at the first web path position on the connecting beam.

As an improvement, in the first unwinding and coating station, the first unwinding unit is located on the right side of the station, and the five-roll transfer coating unit is located on the left side of the station; first and second tension control units are provided on the left and right sides of the station, respectively, and the first tension control unit controls the tension of the first web path, while the second tension control unit is located between the first unwinding unit and the five-roll transfer coating unit on the web path and controls the tension of that section of the web path; Adhesive A supply system is provided in the five-roll transfer coating unit.

As an improvement, in the laminating and rewinding station, the laminating unit is located at the top of the station, and the rewinding unit is located at the lower left of the station; a third tension control unit is provided between the laminating unit and the rewinding unit to control the tension of that section of the web path.

As an improvement, in second unwinding and coating station, the second unwinding unit is located on the left side of the station, and the engraved roller coating unit is located on the right side of the station; fourth and fifth tension control units are provided on the left and right sides of the station, respectively; the fourth tension control unit is located on the web path between the second unwinding unit and the engraved roller coating unit, controlling the tension of that section of the web path, while the fifth tension control unit is located on the second web transfer path and controls the tension of the second web; Adhesive B supply system, an adhesive reservoir, and an engraved roller that can be quickly replaced are provided in the engraved roller coating unit, and the adhesive reservoir is provided with a heating and heat preservation component.

This invention provides the following beneficial effects compared to the prior art:

By using two different coating methods, five-roll transfer coating and engraved roller coating, to respectively coat the surface and inner layer of the laminating substrate with Adhesive A and B of dual-component adhesive, and by controlling the coating amounts of the two methods differently, the coating amounts of the two adhesives are linked. This ensures that the coating amount of Adhesive A is maintained at a certain proportion relative to the coating amount of Adhesive B, and the total coating amount meets the requirements for low coating amounts and/or the reaction curing of dual-component adhesives. Then, the two substrates with adhesive-coated surfaces are laminated and wound, resulting in laminating films with the advantages of short post-curing time, high coating accuracy, good uniformity at extremely low coating amounts, the ability to achieve large coating amounts, and good control operability.

Brief Description of the Drawings

Figure 1 is a schematic diagram of the machine of the present invention.
Figure 2 is a process flowchart I.
Figure 3 is a process flowchart II.

Detailed Description

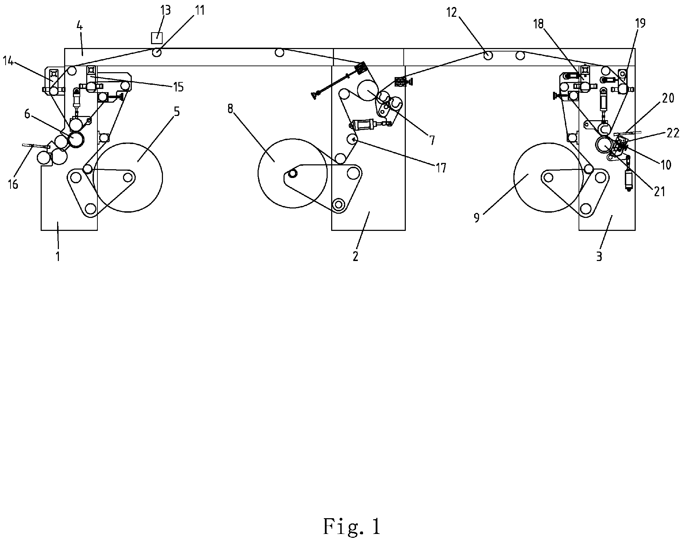

The following further illustrates the present invention with reference to the accompanying drawings.
As shown in Figure 1, a laminating machine for different coating ways with linkage control of coating amounts, in which the connecting beam 4 is provided at the top of the machine, and from left to right below the beam 4, there are successively arranged a first unwinding and coating station 1, a laminating and rewinding station 2, and a second unwinding and coating station 3; the first unwinding and coating station 1 comprises a first unwinding unit 5 and a five-roll transfer coating unit 6; the laminating and rewinding station 2 comprises a laminating unit 7 and a rewinding unit 8, and he second unwinding and coating station 3 comprises a second unwinding unit 9 and an engraved roller coating unit 10; the first idler rollers for the first web path 11 connecting the five-roll transfer coating unit 6 with the laminating unit 7 and the second idler rollers for the second web path 12 connecting the engraved roller coating unit 10 with the laminating unit are provided on the connecting beam 4, and a detecting instrument 13 for the coating amount is provided at the first web path position on the connecting beam.
As shown in Figure 1, in the first unwinding and coating station 1, the first unwinding unit 5 is located on the right side of the unit, and the five-roll transfer coating unit 6 is located on the left side of the unit. First 14 and second 15 tension control units are provided on the left and right sides of the unit, respectively, and the first tension control unit 14 controls the tension of the first web path, while the second tension control unit 15 is located between the first unwinding unit 5 and the five-roll transfer coating unit 6 on the belt path and controls the tension of that section of the belt path. Adhesive A supply system 16 is provided in the five-roll transfer coating unit 6. A detecting instrument for the coating amount 13 is provided at the first web path position on the connecting beam.
As shown in Figure 1, in the laminating and rewinding station 2, the laminating unit 7 is located at the top of the station, and the rewinding unit 8 is located at the lower left of the station; a third tension control unit 17 is provided between the laminating unit and the rewinding unit to control the tension of that section of the web path.
As shown in Figure 1, in the second unwinding and coating station 3, the second unwinding unit 9 is located on the left side of the station, and the engraved roller coating unit 10 is located on the right side of the station. Fourth 18 and fifth 19 tension control units are provided on the left and right sides of the station, respectively. The fourth tension control unit 18 is located on the web path between the second unwinding unit 9 and the engraved roller coating unit 10, controlling the tension of that section of the belt path, while the fifth tension control unit 19 is located on the second web transfer path and controls t' he tension of the second web. Adhesive B supply system 20, an adhesive reservoir 22, and an engraved roller 32 that can be quickly replaced are provided in the engraved roller coating unit 10, and the adhesive reservoir 22 is provided with a heating and heat preservation component. The engraved rollers 21 can be replaced by various specifications, and the parameter vectors of each engraved roller are different. The parameter vector is a directly calculated value or an optimal value set by the industry or user. The parameter vector comprises mesh number, cavity shape, depth, and cavity volume.

The present invention employs a laminating method of double coating in different ways and linkage control of coating amounts:

(1) Using multi-roll transfer coating to apply Adhesive A on the coating surface of the first substrate, and using engraved roller gravure coating to apply Adhesive B on the coating surface of the second substrate, where the coating amount of Adhesive A relative to Adhesive B is maintained at a preset ratio and the total coating amount meets the set requirements;

(2) Pressing and compounding the coating surface of the first substrate with the coating surface of the second substrate and rewinding;

(3) Rapidly curing the wound material into a laminating film under set temperature conditions, with temperatures ranging from 35 to 55 degrees Celsius and curing times ranging from 2 to 8 hours.

The present invention utilizes the advantages of two coating systems based on the characteristics of adhesives, through separate control and coordinated control and parameter optimization. This ensures that the coating amounts of Adhesive A and Adhesive B are within a reasonable range, and the coating amount of Adhesive A is maintained at a certain proportion relative to Adhesive B to meet the requirements of dual-component reaction curing. The adhesive films of A and B can contact and penetrate each other to begin the reaction curing process. The two substrates are rolled together under sufficient tension and pressure conditions. The rolled material is then sent to a curing chamber at an appropriate temperature to facilitate rapid curing into a film. This process achieves the rapid laminating of dual-component adhesives under high-precision and high-stability conditions with low coating amounts and without the need for mixing, shortening the production process and accelerating product delivery.

The coating amount data of the laminating film is as follows:

The coating amount of Adhesive A $C_A=100*C_B/R_{AB}=100* K_B*Q_B/R_{AB}$ g/m$^2$;
The coating amount of Adhesive B $C_B=K_B*Q_B$ g/m$^2$;
Total coating amount $C_\Sigma=C_A+C_B=(1+100/R_{AB})K_B*Q_B$ g/m$^2$;
Theoretical maximum coating amount $Q_B=\rho*V/1000$ g/m$^2$;
Practical mixing ratio of dual-component adhesive $R_{AB}=R_0+\triangle$;
where $K_B$ is the transfer rate of Adhesive B to the engraved roller, $\rho$ (g/cm$^3$) is the density of Adhesive B, V (mm$^3$/m$^2$) is the density specific volume ratio of the gravure network, and $\triangle$ takes a value in the range of 0-20.

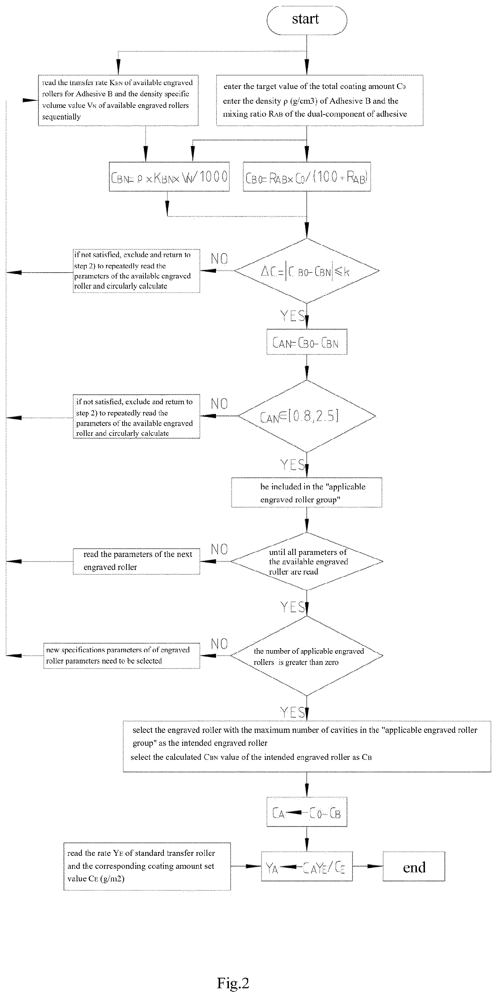

As shown in Figure 2, process control parameter setting procedure I, When the target value of the total coating amount $C_0$ of the laminating film and the mixing ratio $R_{AB}$ of the dual-component of adhesive are known, the process for calculatting, selectting and setting the laminating control parameter is as follows:

1) Calculate the required coating amount $C_{B0}$ of Adhesive B according to the formula of $C_{B0}= R_{AB}*C_0/(100+R_{AB})$;
2) Read the transfer rate $K_{BN}$ of available engraved rollers for Adhesive B and the density specific volume value $V_N$ (mm$^3$/m$^2$) of available engraved rollers, and the density $\rho$ (g/cm$^3$) of Adhesive B, and calculate the calculated coating amount $C_{BN}$ of the engraved roller according to the formula of $C_{BN}=\rho*K_{BN} *V_N/1000$;
3) Compare the absolute value of the difference between the calculated coating amount of the engraved roller and the required coating amount with the error k by the formula of $\Delta C= |C_{B0} - C_{BN}|\leq k$. If it is not satisfied, exclude and return to step 2) to repeatedly read the parameters of the available engraved roller and circularly calculate with K taking values from 0 - 0.02; if satisfied, proceed to next step;
4) Calculate the coating amount $C_{AN}$ of Adhesive A based on the total coating amount $C_0$ and the calculated coating amount $C_{BN}$ of the selected engraved roller by step 3) according to the formula of $C_{AN}=C_0-C_{BN}$;
5) Determine whether the $C_{AN}$ value that is calculated by step 4)satisfies the judgment condition $C_{AN} \in [0.8, 2.5]$; if not satisfied, exclude and return to step 2) to repeatedly read the parameters of the available engraved roller and circularly calculate; those meeting the conditions are listed in the "applicable engraved roller group"; loop to read data and calculate until all parameters of the available engraved roller are read; if none of parameters of the engraved roller meet the requirements, new specifications of parameters of engraved roller need to be selected;

6) Compare the number of nets of engraved roller and select the engraved roller with the maximum number of cavities in the "applicable engraved roller group" as the intended engraved roller;

7) Select the calculated $C_{BN}$ value of the intended engraved roller as $C_B$, and calculate the required coating amount $C_A$ of Adhesive A according to $C_A=C_0-C_B$;

8) Calculate the rate of transfer roller of the five-roll transfer coating mechanism by the formula of $Y=C_A*Y_E/C_E$, where $Y_E$ and $C_E$ are the standard rate of transfer roller and the corresponding coating amount set value ($g/m^2$) of the five-roll transfer coating mechanism, and set this value in the control screen input box of machine;

9) After starting the machine, adjust the rate value $Y_A$ of transfer roller appropriately according to Adhesive A coating amount value $T_{AC}$ displayed by the substrate coating amount detection equipment to match the five-roll transfer coating amount with the engraved roller coating amount.

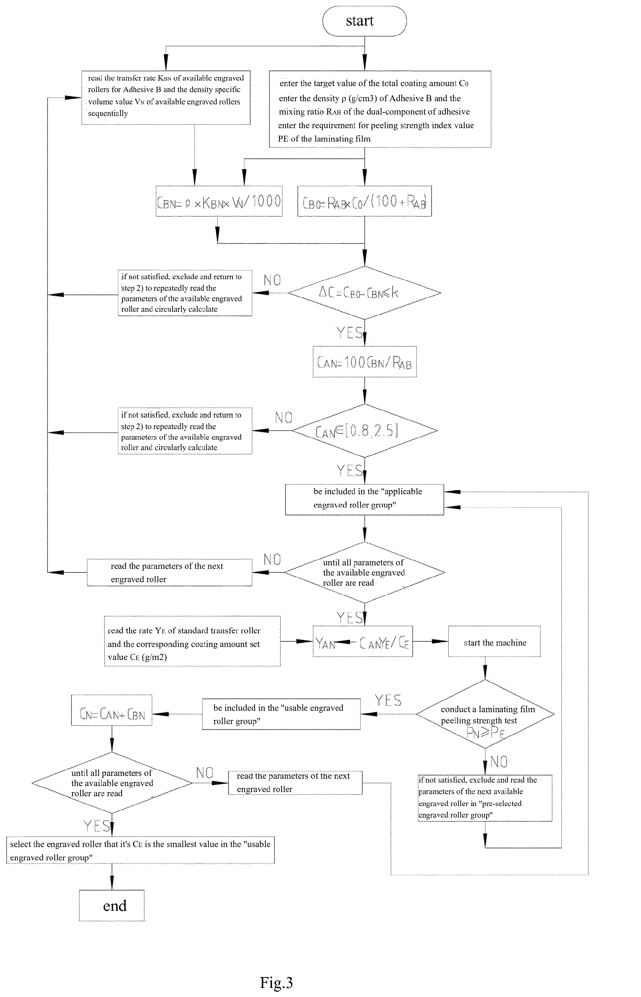

As shown in Figure 3, process control parameter setting procedure II, When the estimated value $C_0$ of the total coating amount of the laminating film and the mixing ratio $R_{AB}$ of the dual-component of adhesive are known, and the requirement for peeling strength index value $P_E$ of the laminating film, the process for calculatting, selectting and setting the laminating control parameter is as follows:

1) Calculate the required coating amount $C_{B0}$ of Adhesive B according to the formula of $C_{B0}= R_{AB}*C_0/(100+R_{AB})$;

2) Read the transfer rate $K_{BN}$ of available engraved rollers for Adhesive B and the density specific volume value $V_N$ ($mm^3/m^2$) of available engraved rollers, and the density $\rho$ ($g/cm^3$) of Adhesive B, and calculate the calculated coating amount $C_{BN}$ of the engraved roller according to the formula of $C_{BN}=\rho*K_{BN}*V_N/1000$;

3) Compare the difference between the calculated coating amount of the engraved roller and the required coating amount with the error k by the formula of $\triangle C=C_{B0}-C_{BN}\leq k$; if it is not satisfied, exclude and return to step 2) to repeatedly read and calculate the available engraved roller parameters; circularly calculate with K taking values from 0 - 0.02; if satisfied, proceed to the next step;

4) Calculate the coating amount $C_{AN}$ of Adhesive A based on the mixing ratio $R_{AB}$ of the dual-component of adhesive and the calculated coating amount $C_{BN}$ of the selected engraved roller by step 3) according to the formula of $C_{AN}=100C_{BN}/R_{AB}$;

5) Determine whether the calculated $C_{AN}$ value that is calculated by step 4) satisfies the judgment condition $C_{AN} \in [0.8, 2.5]$; if not satisfied, exclude and return to step 2) to repeatedly read the parameters of the available engraved roller and circularly calculate; those meeting the conditions are listed in the "preselected engraved roller group"; loop to read data and calculate until all parameters of the available engraved roller are read; if none of the parameters of engraved roller parameters meet the requirements, new specifications parameters of of engraved roller parameters need to be selected;

6) Calculate the rate of transfer roller by the formula of $Y_{AN}=C_{AN}*Y_E/C_E$ of the five-roll transfer coating mechanism; where $Y_E$ and $C_E$ are the rate of standard transfer roller and the corresponding coating amount set value ($g/m^2$) of the five-roll transfer coating mechanism, and set this value in the control screen input box of machine;

7) Start the machine and conduct a laminating film peeling strength test; if the actual peeling strength value of the laminating film is not less than the peelling strength index value $P_E$, it is included in the "usable engraved roller group" and proceed to the next step; otherwise, exclude and read the parameters of the next available engraved roller in "pre-selected engraved roller group" and return to step 6);

8) Calculate the total coating amount by the formula of $C_N=C_{AN}+C_{BN}$, and read the parameters of the next pre-selected engraved roller, return to step 6), until all parameters of the "pre-selected engraved roller group" are read;

9) Read the total coating amount of the laminating film in the usable engraved roller group, and select the engraved roller that it's parameter is the smallest value, set the rate of transfer roller of selected engraved roller as the input value of the five-roll transfer coating mechanism.

By using two different coating methods, five-roll transfer coating and engraved roller coating, to respectively coat the surface and inner layer of the laminating substrate with Adhesive A and B of dual-component adhesive, and by controlling the coating amounts of the two methods differently, the coating amounts of the two adhesives are linked. This ensures that the coating amount of Adhesive A is maintained at a certain proportion relative to the coating amount of Adhesive B, and the total coating amount meets the requirements for low coating amounts and/or the reaction curing of dual-component adhesives. Then, the two substrates with adhesive-coated surfaces are laminated and wound, resulting in laminating films with the advantages of short post-curing time, high coating accuracy, good uniformity at extremely low coating amounts, the ability to achieve large coating amounts, and good control operability.

## Claims

1. A laminating method for different coating ways with linkage control of coating amounts **characterized by** comprising the following step:

    (1) using multi-roll transfer coating to apply Adhesive A on the coating surface of the first substrate, and using engraved roller gravure coating to apply Adhesive B on the coating surface of the second substrate, where the coating amount of Adhesive A relative to Adhesive B is maintained at a preset ratio and the total coating amount meets the set requirements;
    (2) pressing and laminating the coating surface of the first substrate with the coating surface of the second substrate and rewinding;
    (3) rapidly curing the wound material into a laminating film under set temperature conditions.

2. A laminating method for different coating ways with linkage control of coating amounts according to claim 1, **characterized in that**:

    the coating amount of Adhesive A $C_A=100*C_B/R_{AB} =100* K_B*Q_B/R_{AB}$ g/m²;
    the coating amount of Adhesive B $C_B=K_B*Q_B$ g/m²;
    total coating amount $C_\Sigma=C_A+C_B=(1+100/R_{AB}) K_B*Q_B$ g/m²;
    theoretical maximum coating amount $Q_B=\rho*V/1000$ g/m²;
    practical mixing ratio of dual-component adhesive $R_{AB}=R_0+\triangle$;
    where $K_B$ is the transfer rate of Adhesive B to the engraved roller, $\rho$ (g/cm³) is the density of Adhesive B, V (mm³/m²) is the density specific volume ratio of the gravure network, and $\triangle$ takes a value in the range of 0-20.

3. A laminating method for different coating ways with linkage control of coating amounts according to claim 1, **characterized in that**: when the target value of the total coating amount $C_0$ of the laminating film and the mixing ratio $R_{AB}$ of the dual-component of adhesive are known, the process for calculatting, selectting and setting the laminating control parameter is as follows:

    1) calculate the required coating amount $C_{B0}$ of Adhesive B according to the formula of $C_{B0}= R_{AB} *C_0/(100+R_{AB})$;
    2) read the transfer rate $K_{BN}$ of available engraved rollers for Adhesive B and the density specific volume value $V_N$ (mm³/m²) of available engraved rollers, and the density $\rho$ (g/cm³) of Adhesive B, and calculate the calculated coating amount $C_{BN}$ of the engraved roller according to the formula of $C_{BN}=\rho*K_{BN} *V_N/1000$;
    3) compare the absolute value of the difference between the calculated coating amount of the engraved roller and the required coating amount with the error k by the formula of $\triangle C=|C_{B0} - C_{BN}|\leq k$; if it is not satisfied, exclude and return to step 2) to repeatedly read the parameters of the available engraved roller and circularly calculate with K taking values from 0 - 0.02; if satisfied, proceed to the next step;
    4) calculate the coating amount $C_{AN}$ of Adhesive A based on the total coating amount $C_0$ and the calculated coating amount $C_{BN}$ of the selected engraved roller by step 3) according to the formula of $C_{AN}=C_0- C_{BN}$;
    5) determine whether the $C_{AN}$ value that is calculated by step 4)satisfies the judgment condition $C_{AN} \in [0.8, 2.5]$; if not satisfied, exclude and return to step 2) to repeatedly read the parameters of the available engraved roller and circularly calculate; those meeting the conditions are listed in the "applicable engraved roller group"; loop to read data and calculate until all parameters of the available engraved roller are read; if none of parameters of the engraved roller meet the requirements, new specifications of parameters of engraved roller need to be selected;
    6) compare the number of nets of engraved roller and select the engraved roller with the maximum number of cavities in the "applicable engraved roller group" as the intended engraved roller;
    7) select the calculated $C_{BN}$ value of the intended engraved roller as $C_B$, and calculate the required coating amount $C_A$ of Adhesive A according to $C_A=C_0-C_B$;
    8) calculate the rate of transfer roller of the five-roll transfer coating mechanism by the formula of $Y=C_A*Y_E/C_E$, where $Y_E$ and $C_E$ are the standard rate of transfer roller and the corresponding coating amount set value (g/m²) of the five-roll transfer coating mechanism, and set this value in the control screen input box of machine;
    9) after starting the machine, adjust the rate value $Y_A$ of transfer roller appropriately according to Adhesive A coating amount value $T_{AC}$ displayed by the substrate coating amount detection equipment to match the five-roll transfer coating amount with the engraved roller coating amount.

4. A laminating method for different coating ways with linkage control of coating amounts according to claim 1, **characterized in that**: when the estimated value $C_0$ of the total coating amount of the laminating film and the mixing ratio $R_{AB}$ of the dual-component of adhesive are known, and the requirement for peeling strength index value $P_E$ of the laminating film, the process for calculatting, selectting and setting the laminating control parameter is as follows:

1) calculate the required coating amount $C_{B0}$ of Adhesive B according to the formula of

$$C_{B0}= R_{AB} *C_0/(100+R_{AB});$$

2) read the transfer rate $K_{BN}$ of available engraved rollers for Adhesive B and the density specific volume value $V_N$ ($mm^3/m^2$) of available engraved rollers, and the density $\rho$ ($g/cm^3$) of Adhesive B, and calculate the calculated coating amount $C_{BN}$ of the engraved roller according to the formula of $C_{BN}=\rho*K_{BN} *V_N /1000$;

3) compare the difference between the calculated coating amount of the engraved roller and the required coating amount with the error k by the formula of $\triangle C=C_{B0}-C_{BN}\leq k$; if it is not satisfied, exclude and return to step 2) to repeatedly read and calculate the available engraved roller parameters; circularly calculate with K taking values from 0 - 0.02; if satisfied, proceed to the next step;

4) calculate the coating amount $C_{AN}$ of Adhesive A based on the mixing ratio $R_{AB}$ of the dual-component of adhesive and the calculated coating amount $C_{BN}$ of the selected engraved roller by step 3) according to the formula of $C_{AN}=100C_{BN}/R_{AB}$;

5) determine whether the calculated $C_{AN}$ value that is calculated by step 4) satisfies the judgment condition $C_{AN} \in [0.8, 2.5]$; if not satisfied, exclude and return to step 2) to repeatedly read the parameters of the available engraved roller and circularly calculate; those meeting the conditions are listed in the "pre-selected engraved roller group"; loop to read data and calculate until all parameters of the available engraved roller are read; if none of the parameters of engraved roller parameters meet the requirements, new specifications parameters of of engraved roller parameters need to be selected;

6) calculate the rate of transfer roller by the formula of $Y_{AN}=C_{AN}*Y_E/C_E$ of the five-roll transfer coating mechanism; where $Y_E$ and $C_E$ are the rate of standard transfer roller and the corresponding coating amount set value ($g/m^2$) of the five-roll transfer coating mechanism, and set this value in the control screen input box of machine;

7) start the machine and conduct a laminating film peeling strength test; if the actual peeling strength value of the laminating film is not less than the peeling strength index value $P_E$, it is included in the "usable engraved roller group" and proceed to the next step; otherwise, exclude and read the parameters of the next available engraved roller in "pre-selected engraved roller group" and return to step 6);

8) calculate the total coating amount by the formula of $C_N=C_{AN}+C_{BN}$, and read the parameters of the next pre-selected engraved roller, return to step 6), until all parameters of the "pre-selected engraved roller group" are read;

9) read the total coating amount of the laminating film in the usable engraved roller group, and select the engraved roller that it's parameter is the smallest value; set the rate of transfer roller of selected engraved roller as the input value of the five-roll transfer coating mechanism.

5. A laminating method for different coating ways with linkage control of coating amounts as claimed in claim 3 or 4, **characterized in that**: the rate of transfer roller Y value of the five-roll transfer coating mechanism can be obtained by looking up or interpolating the rate of transfer roller /coating amount curve.

6. A laminating method for different coating ways with linkage control of coating amounts as claimed in claim 3 or 4, **characterized in that**: the engraved rollers comprise various specifications, and the parameter vectors of each engraved roller are different; the parameter vector is a directly calculated value or an optimal value set by the industry or user; the parameter vector comprises mesh number, cavity shape, depth, and cavity volume.

7. A laminating machine for different coating ways with linkage control of coating amounts, **characterized by**: a connecting beam is provided at the top of the machine, and from left to right below the beam, there are successively arranged a first unwinding and coating station, a laminating and rewinding station, and a second unwinding and coating station; the first unwinding and coating station comprises a first unwinding unit and a five-roll transfer coating unit; the laminating and rewinding station comprises a laminating unit and a rewinding unit, and he second unwinding and coating station comprises a second unwinding unit and an engraved roller coating unit; the first idler rollers for the first web path connecting the five-roll transfer coating unit with the laminating unit and the second idler rollers for the second web path connecting the engraved roller coating unit with the laminating unit are provided on the connecting beam; and a detecting instrument for the coating amount is provided at the first web path position on the connecting beam.

8. A laminating machine for different coating ways with linkage control of coating amounts as claimed in claim 7, **characterized in that**: in the first unwinding and coating station, the first unwinding unit is located on the right side of the station, and the five-roll transfer coating unit is located on the left side of the station; first and second tension control units are provided on the left and right sides of the station, respectively, and the first tension control unit controls the tension of the first web path, while the second tension control unit is located between the first unwinding unit and the five-roll transfer coating unit on the web path and controls the tension of that section of the web path; Adhesive A supply system is provided in the five-roll transfer coating unit.

9. A laminating machine for different coating ways with linkage control of coating amounts as claimed in claim 7, **characterized in that**: in the laminating and rewinding station, the laminating unit is located at the top of the station, and the rewinding unit is located at the lower left of the station; a third tension control unit is provided between the laminating unit and the rewinding unit to control the tension of that section of the web path.

10. A laminating machine for different coating ways with linkage control of coating amounts as claimed in claim 7, **characterized in that**: in the second unwinding and coating station, the second unwinding unit is located on the left side of the station, and the engraved roller coating unit is located on the right side of the station; fourth and fifth tension control units are provided on the left and right sides of the station, respectively; the fourth tension control unit is located on the web path between the second unwinding unit and the engraved roller coating unit, controlling the tension of that section of the web path, while the fifth tension control unit is located on the second web transfer path and controls the tension of the second web; Adhesive B supply system, an adhesive reservoir, and an engraved roller that can be quickly replaced are provided in the engraved roller coating unit, and the adhesive reservoir is provided with a heating and heat preservation component.

Fig. 1

```
                          ┌─────────┐
                          │  start  │
                          └─────────┘
```

read the transfer rate $K_{BN}$ of available engraved rollers for Adhesive B and the density specific volume value $V_N$ of available engraved rollers sequentially

enter the target value of the total coating amount $C_0$
enter the density $\rho$ (g/cm3) of Adhesive B and the mixing ratio $R_{AB}$ of the dual-component of adhesive

$$C_{BN} = \rho \times K_{BN} \times V_N / 1000$$

$$C_{B0} = R_{AB} \times C_0 / (100 + R_{AB})$$

if not satisfied, exclude and return to step 2) to repeatedly read the parameters of the available engraved roller and circularly calculate

NO

$$\Delta C = |C_{B0} - C_{BN}| \leq k$$

YES

$$C_{AN} = C_{B0} - C_{BN}$$

if not satisfied, exclude and return to step 2) to repeatedly read the parameters of the available engraved roller and circularly calculate

NO

$$C_{AN} \in [0.8, 2.5]$$

YES

be included in the "applicable engraved roller group"

read the parameters of the next engraved roller

NO

until all parameters of the available engraved roller are read

YES

new specifications parameters of of engraved roller parameters need to be selected

NO

the number of applicable engraved rollers is greater than zero

YES

select the engraved roller with the maximum number of cavities in the "applicable engraved roller group" as the intended engraved roller
select the calculated $C_{BN}$ value of the intended engraved roller as $C_B$

$$C_A \leftarrow C_0 - C_B$$

read the rate $Y_E$ of standard transfer roller and the corresponding coating amount set value $C_E$ (g/m2)

$$Y_A \leftarrow C_A Y_E / C_E$$

end

Fig.2

start

read the transfer rate $K_{BN}$ of available engraved rollers for Adhesive B and the density specific volume value $V_N$ of available engraved rollers sequentially

enter the target value of the total coating amount $C_0$
enter the density ρ (g/cm3) of Adhesive B and the mixing ratio $R_{AB}$ of the dual-component of adhesive
enter the requirement for peeling strength index value $P_E$ of the laminating film

$$C_{BN} = ρ \times K_{BN} \times W / 1000$$

$$C_{B0} = R_{AB} \times C_0 / (100 + R_{AB})$$

if not satisfied, exclude and return to step 2) to repeatedly read the parameters of the available engraved roller and circularly calculate

NO

$$\Delta C = C_{B0} - C_{BN} \leq k$$

YES

$$C_{AN} = 100 C_{BN} / R_{AB}$$

if not satisfied, exclude and return to step 2) to repeatedly read the parameters of the available engraved roller and circularly calculate

NO

$$C_{AN} \in [0.8, 2.5]$$

YES

be included in the "applicable engraved roller group"

read the parameters of the next engraved roller

NO

until all parameters of the available engraved roller are read

YES

read the rate $Y_E$ of standard transfer roller and the corresponding coating amount set value $C_E$ (g/m2)

$$Y_{AN} = C_{AN} Y_E / C_E$$

start the machine

$$C_N = C_{AN} + C_{BN}$$

be included in the "usable engraved roller group"

YES

conduct a laminating film peeling strength test
$$P_N \geq P_E$$

until all parameters of the available engraved roller are read

NO

read the parameters of the next engraved roller

NO

if not satisfied, exclude and read the parameters of the next available engraved roller in "pre-selected engraved roller group"

YES

select the engraved roller that it's $C_E$ is the smallest value in the "usable engraved roller group"

end

Fig.3

## INTERNATIONAL SEARCH REPORT

| International application No. |
|---|
| **PCT/CN2023/101883** |

### A. CLASSIFICATION OF SUBJECT MATTER

B05D1/28(2006.01)i; B05C11/10(2006.01)i

According to International Patent Classification (IPC) or to both national classification and IPC

### B. FIELDS SEARCHED

Minimum documentation searched (classification system followed by classification symbols)

IPC: B05D, B05C

Documentation searched other than minimum documentation to the extent that such documents are included in the fields searched

Electronic data base consulted during the international search (name of data base and, where practicable, search terms used)

DWPI; CNTXT; CNABS; CNKI: 涂布, 涂覆, 涂布量, 涂覆量, 控制, 辊, 凹版, 胶, 粘合, coating, amount, control, roller, gravure, glue, adhesive

### C. DOCUMENTS CONSIDERED TO BE RELEVANT

| Category* | Citation of document, with indication, where appropriate, of the relevant passages | Relevant to claim No. |
|---|---|---|
| PX | CN 115228704 A (GUANGZHOU SINOMECH CORP.) 25 October 2022 (2022-10-25) claims 1-10 | 1-10 |
| PX | CN 218257239 U (GUANGZHOU SINOMECH CORP.) 10 January 2023 (2023-01-10) description, paragraphs 14-50 | 1-10 |
| X | CN 111246991 A (DIC CORP. et al.) 05 June 2020 (2020-06-05) description, paragraphs 42-101, and figure 1 | 1 |
| Y | CN 111246991 A (DIC CORP. et al.) 05 June 2020 (2020-06-05) description, paragraphs 42-101, and figure 1 | 2-10 |
| Y | CN 105197371 A (NINGBO HUAFENG PACKAGE CO., LTD.) 30 December 2015 (2015-12-30) description, paragraphs 5-33 | 2-10 |
| A | CN 104325772 A (CHONGQING SINSTAR PACKAGING MACHINERY CO., LTD.) 04 February 2015 (2015-02-04) entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **23 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/101883** |

| C. | DOCUMENTS CONSIDERED TO BE RELEVANT | |
|---|---|---|
| Category* | Citation of document, with indication, where appropriate, of the relevant passages | Relevant to claim No. |
| A | CN 109049731 A (GUANGDONG SINO-ADHESIVE NEW MATERIAL TECHNOLOGY CO., LTD.) 21 December 2018 (2018-12-21)<br>        entire document | 1-10 |
| A | CN 110696474 A (GUANGDONG XINRUI NEW MATERIAL TECHNOLOGY CO., LTD.) 17 January 2020 (2020-01-17)<br>        entire document | 1-10 |

Form PCT/ISA/210 (second sheet) (July 2022)

**INTERNATIONAL SEARCH REPORT**
**Information on patent family members**

International application No.

**PCT/CN2023/101883**

| Patent document cited in search report | | | Publication date (day/month/year) | Patent family member(s) | | | Publication date (day/month/year) |
|---|---|---|---|---|---|---|---|
| CN | 115228704 | A | 25 October 2022 | None | | | |
| CN | 218257239 | U | 10 January 2023 | None | | | |
| CN | 111246991 | A | 05 June 2020 | WO | 2019082683 | A1 | 02 May 2019 |
| | | | | JP | 6593950 | B2 | 23 October 2019 |
| | | | | JPWO | 2019082683 | A1 | 14 November 2019 |
| | | | | TW | 201922357 | A | 16 June 2019 |
| | | | | KR | 20210145293 | A | 01 December 2021 |
| | | | | US | 2020331249 | A1 | 22 October 2020 |
| | | | | KR | 20200047645 | A | 07 May 2020 |
| | | | | EP | 3702137 | A1 | 02 September 2020 |
| | | | | EP | 3702137 | A4 | 28 July 2021 |
| | | | | JP | 6675547 | B1 | 01 April 2020 |
| | | | | JP | 2020097215 | A | 25 June 2020 |
| CN | 105197371 | A | 30 December 2015 | None | | | |
| CN | 104325772 | A | 04 February 2015 | None | | | |
| CN | 109049731 | A | 21 December 2018 | None | | | |
| CN | 110696474 | A | 17 January 2020 | None | | | |

Form PCT/ISA/210 (patent family annex) (July 2022)